# EUROPEAN PATENT APPLICATION

(11) **EP 1 862 707 A1**
(43) Date of publication of application: **05.12.2007**
(21) Application number: 06729798.6
(22) Date of filing: 23.03.2006
(51) Int. Cl.: F16H 25/22, F16H 29/06, F16C 33/372, F16C 33/44, F16H 25/24

(54) **BALL SCREW**

(30) Priority: 25.03.2005 JP 2005088323; 25.03.2005 JP 2005088324; 28.03.2005 JP 2005092375; 19.01.2006 JP 2006011765
(71) Applicant: NSK Ltd., Tokyo 141-8560 (JP)
(72) Inventor: TAKAHASHI, Daiju c/o NSK, Ltd, Kanagawa 251-8501 (JP)
(74) Representative: Grünecker, Kinkeldey, Stockmair & Schwanhäusser Anwaltssozietät
(86) International application number: PCT/JP2006/305850
(87) International publication number: WO 2006/104015

(57) **Abstract**

A ball screw in which surface hardness of balls is higher than both of surface hardness of a ball screw groove of a screw shaft and surface hardness of a ball screw groove of a nut, and a solid lubricant film is formed on a surface of the balls with a thickness of 1 µm or more and 5 µm or less. Further, cross-sectional shape of grooves 11 and 21 of a screw shaft 1 and a nut 2 is a Gothic arc. A ratio (R/D) of a radius (R) of the arcuate cross-section of the groove 11 with respect to diameter (D) of balls 2 is set to 51.0% or more and 52.0% or less. The solid lubricant film made of MoS₂ is formed on the surface of the balls 3 with a thickness of 0.5 µm and 3.0 µm or less.

## Description

### Technical Field

The invention relates to a ball screw, and specifically, relates to a linear motion device for actuators, such as a ball screw or a linear guide device, which is comparatively large-sized and is used under high load, like those used for industrial machines, such as electric injection molding machines or pressing machines.

### Background Art

A ball screw used for the electric injection molding apparatuses, the electric pressing apparatuses and etc. is used under severe conditions that it receives an extremely large load and reciprocates at a comparatively short stroke. Therefore, lifetime against exfoliation caused by a repeated stress in a raceway surface poses a problem. As a measure against the problem, generally, the diameter of balls is made as large as possible, and the radius of curvature of a raceway surface is made as close to the diameter of the balls as possible, thereby lowering contact pressure, so that the repeated stress value is suppressed, and required lifetime is satisfied.

However, when considering the ball screw, a slip component is large because of a geometric problem that the balls roll on a spiral raceway unlike a ball bearing or a linear guide. In a general ball screw with a lead angle of 15° or less under the influence by the magnitude of the slip component, if the ratio (R/D) of the radius (R) of an arc, which forms the cross-section of a groove, with respect to a ball diameter (D) is 52% or less, there is rather a problem that the lifetime of the ball screw is shortened as represented by white structure flaking. Therefore, it is general that the R/D is set to 52% or more and 54% or less.

As a first background art, a conventional ball screw that is comparatively large-sized and is used under high load, like those used for the electric injection molding machines, the pressing machines and etc., is used at a short stroke in which high load is instantaneously applied, and is used under the severe conditions of reciprocation that the ball screw rotates reversely after it has once stopped in a state where maximum load is applied thereto.

Further, as feature of the ball screw used for the above machines, there is an attachment error of the ball screw to be attached to a base. That is, it is assumed that there is a comparatively large attachment error between the ball screw and the base. Due to this attachment error, a relative torsional moment is generated between a screw shaft and a nut, and consequently, a revolution speed difference is caused between balls. This causes competition and collision between the balls, so that damage, wear, and exfoliation will occur. As a result, the generated metal powder is mixed into grease, and acts as foreign matters, so that premature exfoliation of a ball screw groove (rolling surface) of the screw shaft or nut will be caused.

Further, although an oil film is formed on ball surfaces or a rolling surface by sealed grease, collision between balls occurs between a convex shape and a convex shape. Therefore, as compared with collision between the rolling surface and the balls (collision between a concave shape and a convex shape), an oil film is hardly formed, and also discontinuity of an oil film is apt to occur, and metallic contact is apt to occur.

In order to solve such problems, in a ball screw that applies preload to between balls and a ball screw groove of a screw shaft or a ball screw groove of a nut to secure positioning accuracy, an improvement in the wear resistance of the balls is performed by making the surface hardness of the balls higher than the surface hardness of the ball screw groove of the screw shaft, and the surface hardness of the ball screw groove of the nut (refer to Patent Document 1).

Further, a method of injecting particulates of molybdenum disulfide (MoS₂) to balls of a ball screw, a ball screw groove of a screw shaft, and a ball screw groove of a nut, and making them collide against and secured to the groove to form a lubricating film with a film thickness of 0.5 µm or less, thereby improving wear resistance, is also performed (refer to Patent Document 2).
Further, a ball screw that injects particulates of molybdenum disulfide to a sliding portion of at least one of the ball screw groove of the screw shaft, the ball screw groove of the nut, and the balls, and makes them collide against and fixed to the sliding portion to form a lubricating film with a film thickness of 0.5 µm or less, thereby improving wear resistance, is suggested in Patent Document 2.

It is described in Patent Document 2 that, when the film thickness is set to 0.5 µm or less, fixability of the film to the sliding portion improves, thereby making it hard for the film to be exfoliated, and, even if the film is exfoliated, a dimensional change can be suppressed low.

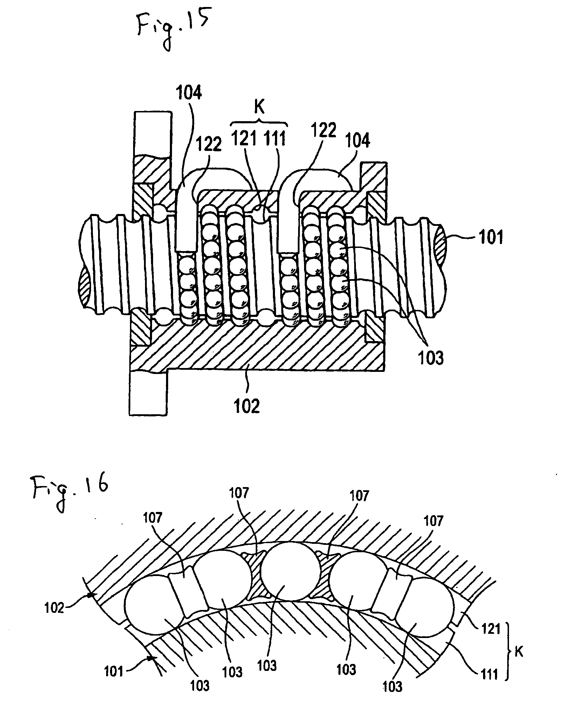

As a second background art, an example of a conventional ball screw is shown in FIGS. 14 (perspective view) and 15 (sectional view). This ball screw is a tube-type ball screw using a tube as a return passage of balls, and is composed of a screw shaft 101, a nut 102, balls 103, and tubes 104. Reference numeral 106 of FIG. 14 designates a tube holder that fixes the tubes 104 to the nut 102. This tube holder 106 is not shown in FIG. 15. Spiral grooves 111 and 121 are formed in an outer peripheral surface of the screw shaft 101 and an inner peripheral surface of the nut 102, respectively, and a raceway K of the balls 103 is formed by the grooves 111 and 121. As the balls 103 roll along the raceway under loaded state, the nut 102 linearly moves relative to the screw shaft 101.

Each of the tubes 104 is formed substantially in the form of a gate, and both ends thereof are respectively inserted into through-holes 122 provided in a cylinder that forms the nut 102, and are obliquely arranged with the screw shaft 101 therebetween so as to connect a starting point and an ending point of the raceway K. Accordingly, a ball 103 that has reached the ending point of the raceway K is returned to the starting point of the raceway K through the tube 104. In this example, since the ball screw has two ball circulation passages (raceway + return passage), two tubes 104 are provided.

The ball screw for the electric injection molding machines or the pressing machines is comparatively large-sized, and receives high load. Concretely, the ball screw is used at a short stroke in which high load is instantaneously applied, and repeats the reciprocation of rotating reversely after it has once stopped in a state where maximum load is applied thereto. Since the ball screw is used under such severe conditions, as a ball screw for the aforementioned applications, a ball screw in which assembling clearance in a single nut is made extremely small (about 1/400 at a ratio to a ball diameter) is conventionally used. The method of increasing the load capacity of a ball screw to prolong the lifetime thereof includes a method of making the ratio (R/D) of the radius (R) of the arcuate cross-section of the grooves 111 and 121 (the screw shaft 101 and the nut 102) with respect to the diameter (D) of the balls 103 smaller than the conventional 52.0% to 54.0%.

However, in this method, the major axis of a contact ellipse between a ball and a groove that forms a raceway becomes longer than a conventional ball screw, and accordingly, a slip component becomes large. Along with this, since a tangential force in the contact ellipse becomes large, a possibility that surface-originated exfoliation may occur or internally originated exfoliation caused by white texture may occur cannot be denied. Further, since the rolling speed of the balls in the ball screw is slow as compared with general rolling bearings, such as a ball bearing, an oil film is hardly formed. Consequently, if the ratio (R/D) in the ball screw is made smaller than 52.0 to 54.0%, it is necessary to take a measure that does not result in premature damage.

As conventional examples of the measures that improve the lubrication characteristics of the ball screw, the measures that are shown below can be exemplified.
A method of using specific grease in order to prevent premature exfoliation of a ball screw used for drive systems of electric injection molding machines is described in the following Patent Document 3.
A method of spraying from nozzles particulates made of soft metal, such as gold, silver, lead, zinc, tin (Sn), or indium, polytetrafluoroethylene (PTFE), perfluoroalkoxy fluororesin (PTA) and etc., together with air, against at least some frictional surfaces of rolling frictional surfaces and sliding frictional surfaces of machine parts using balls, thereby forming a solid lubricating film, is disclosed in the following Patent Document 4. (Refer to Patent Document 2)

As a third background art, a linear motion device that uses balls or rollers as balls in order to convert a rotational motion into a linear motion or smoothly perform rectilinear movement of a worktable, etc. in machine tools, such as a machining center, or industrial robots, is frequently used.

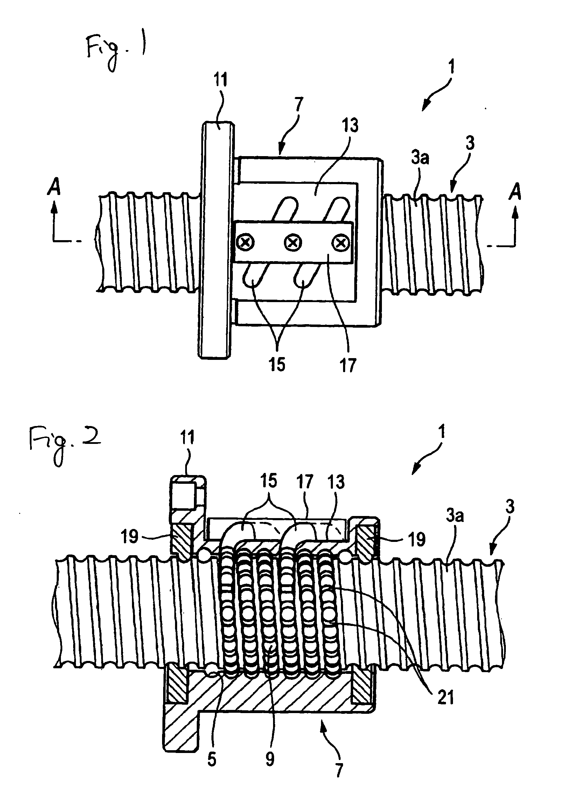

FIG. 1 is a top view showing one example of a ball screw that is one of linear motion devices, and FIG. 2 is a sectional view taken along a line A-A in FIG. 1. As shown in these figures, the ball screw 1 is composed of a screw shaft 3 at an outer peripheral portion of which a male screw groove 3a is formed, a cylindrical nut 7 that is a linear motion body at an inner peripheral surface of which a female screw groove 5 is formed, and a plurality of balls 9 that are interposed between the male screw groove 3a and the female screw groove 5.

The nut 7 is a cylindrical nut that linearly moves along in an axial axis direction of the screw shaft 3. One end of the nut is formed with a flange 11 to be fixed to a table (not shown), etc., and a part of the outer peripheral surface of the nut is cut away to form a planar portion 13. The inner peripheral surface of the nut 7 is formed with the female screw groove 5 having the same shape and pitch as the male screw groove 3a. A tube 15 that serves as a circulating path that allows one end and the other end of the female screw groove 5 to communicate with each other is fixed to the planar portion 13 by a tube holder 17. Also, the balls 9 is fed through the tube 15, and the balls 9 are circulated from one end of the female screw groove 5 to the other end thereof. Further, dust seals 19 made of plastic may be respectively arranged at both ends of the nut 7 so as to prevent foreign matters from entering the nut 7 from the outside.

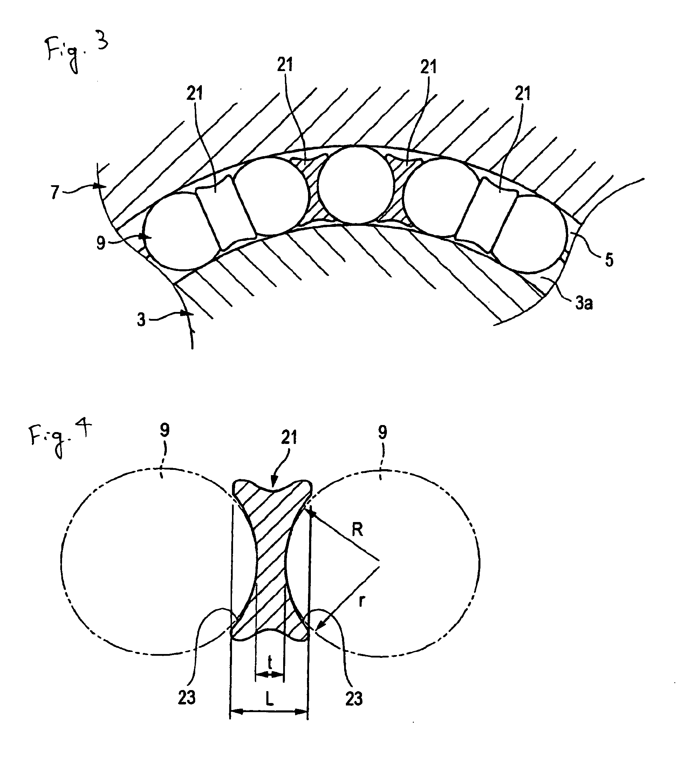

The ball screw 1 is schematically configured as described above. In this case, the balls 9 collide with each other, and thereby noises are generated, or the balls 9 are damaged. Thus, as shown in the figures, it is general that a retaining piece 21 is interposed between a ball 9 and a ball 9. For example, as shown in FIG. 3 (sectional view vertical to the axis of the screw shaft 3), a retaining piece 21 that have a contact surface 11 that contacts a ball 9 formed in the shape of a concave spherical surface is interposed between balls 9 and 9. As the material of the retaining piece 21, polyamide such as 66 nylon, and synthetic resin such as fluororesin is generally employed (refer to Patent Document 5).

As a fourth background art, a ball screw used for the electric injection molding machines, the pressing machines and etc., is a ball screw that is comparatively large-sized and receives high load. The ball screw is used at a short stroke in which high load is instantaneously applied, and is used under the severe conditions that the ball screw rotates reversely (reciprocates) after it has once stopped in a state where maximum load is applied thereto.
In such a ball screw, it is inevitable that a torsional moment load is applied to between the screw shaft and the nut due to lack of the rigidity of an apparatus itself into which the ball screw is assembled. If the ball screw is used in a state where the torsional moment load is applied, the revolution speed of balls will differ within a load region. Therefore, there is a possibility that clogging of a ball may occur in a ball return passage (path that allows balls to be fed and circulated from an ending point of a ball rolling passage, which is formed by the screw groove of the screw shaft and the screw groove of the nut, to a starting point thereof). Further, since the balls move through the ball return passage staggeringly, the balls will move while being rubbed against the internal surface of the ball return passage.

Moreover, such a ball screw is designed so that the diameter of the balls is larger than the diameter of the screw shaft in order to increase its load capacity. Accordingly, since the kinetic energy of the balls increases as the diameter of the balls becomes large, the influence of the balls on the ball return passage also increases.
If the balls moves while being rubbed against the internal surface of the ball return passage by an excessive force, there is a possibility that wear or exfoliation may occur the internal surface of the ball return passage, and poor circulation of the balls may occur. Further, since the worn powder or exfoliated powder may act as foreign matters, there is also a possibility that premature exfoliation occurs in a screw groove or a ball, and the lifetime of the ball screw may be shortened.

A ball screw in which the roughness of the internal surface of a circulation tube that corresponds to the aforementioned ball return passage is set to 0.2 µmRa or less in arithmetic mean roughness is suggested as a measure against such a problem. Since generation of dust, such as metal powder, which accompanies contact between the internal surface of the circulation tube and the balls, is suppressed from such a configuration, the amount of foreign matters that enters a space between the screw groove and the ball can be suppressed. (Refer to Patent Document 6)

Moreover, a ball screw in which a circulation member corresponding to the aforementioned ball return passage is composed of a solid lubricant is disclosed. Such a ball screw can be suitably used in an environment where normal lubrication by lubricating oil, grease, etc. is difficult.
(Refer to Patent Document 7)
Patent Document 1: JP-A-2.000-346162
Patent Document 2: JP-A-2004-60742
Patent Document 3: JP-A-2001-49274
Patent Document 4: JP-A-6-109022
Patent Document 5: JP-A-11-315835
Patent Document 6: JP-A-2004-92787
Patent Document 7: JP-A-62-283252

### Disclosure of the Invention

### Problems to be Solved by the Invention

A first problem is as follows. That is, in a conventional general ball screw, R/D is set to 52% or more and 54% or less. In this case, surface pressure cannot be sufficiently suppressed against an extremely large load required for a ball screw for the electric injection molding apparatuses, the electric press apparatuses and etc. As a result, there is a problem that exfoliation damage (exfoliation caused by fatigue lifetime) caused by repeated stress in a raceway surface occurs prematurely, and thus required lifetime is not satisfied.

Further, if provision of sufficient lifetime is attempted against exfoliation damage by rolling fatigue lifetime by sufficiently suppressing the surface pressure or repeated stress generated in a raceway surface, a ball screw where R/D is set to 52% or less has a problem that the lifetime thereof is rather shortened under the influence by the size of slip between the raceway surface and the balls.

A second problem is as follows. Generally, a ball screw groove of a screw shaft or a nut is finished by the total grinding that grinding is performed by relatively and axially moving a total grindstone molded in a predetermined cross-sectional shape while being rotated, and then by transferring the shape of the grindstone. Therefore, the surface roughness in a perpendicular direction where the shape of the grindstone is transferred as it is as compared with axial roughness becomes quite coarse, and it is general that the surface roughness is set to about 0.3 µm. In contrast, the balls are finished to a surface roughness of about 0.006 µm. Therefore, damage or wear of balls cannot be avoided only by making the surface hardness of the balls higher than the surface hardness of the ball screw groove of the screw shaft, or the surface roughness of the ball screw groove of the nut, like Patent Document 1.

Further, in Patent Document 2, a lubricating film made of molybdenum disulfide is formed on the balls, the ball screw groove of the screw shaft, and the ball screw groove of the nut. In this case, the film thickness is specified to 0.5 µm or less, from the viewpoint of a dimensional change caused by exfoliation of the lubricating film. This originates from the fact that the ball screw of Patent Document 2 has a configuration that gives preload, and the balls screw is used for applications that require high feed accuracy. However, in the ball screw for high-load applications supposed by the invention, there is concern about durability with such a thin lubricating film.

The invention has been made paying attention to such conventional problems, and one object of the invention is to provide a ball screw that is capable of suppressing damage or wear of balls than ever before, long in lifetime, and high in reliability, and particularly suitable for high-load applications used for the electric injection molding apparatuses, the electric press apparatuses and etc.

A third problem includes a problem that, since the retaining pieces 21 always contacts the balls 9, and the balls make an endless circulation motion within a circulating path while generating sliding, sliding friction is continuously caused between the retaining pieces 21 and the balls 9, and the operability of the ball screw 1 deteriorates. Such a problem is a phenomenon that also happens in a linear motion device including balls and retaining pieces, other than the ball screw 1.

The invention has been made in view of such a situation, and aims at improving the operability in a linear motion device including retaining pieces.

A forth problem is as follows. That is, in the ball screw of the aforementioned Patent Document 6, generation of dust, such as metal powder, is suppressed. Thus, it is possible to suppress premature exfoliation of the screw groove or balls caused by biting of foreign matters. However, it is difficult to sufficiently suppress wear and exfoliation of the internal surface of the circulation tube. Further, a measure for preventing wear and exfoliation of the ball return passage are not taken in the ball screw of Patent Document 2. Moreover, in the ball screw of Patent Document 7, the strength of the circulation member made of solid lubricant is not high. Therefore, if the ball screw is used under the conditions that high load is applied, and torsional moment load is applied, there is a possibility that breakage of the circulation member or malfunction of the ball screw may be caused.
Thus, the object of the invention is to solve the problems of the conventional ball screws as described above, and to provide a ball screw that is long in lifetime and has little damage, such as wear or exfoliation, even if the ball screw is used under the conditions that high load is applied, and torsional moment load is applied.

### Means for Solving the Problems

In order to achieve the above objects, as a first constitution of the invention, according to a first aspect of the invention, there is provided a ball screw including:
a screw shaft having a spiral groove formed at an outer peripheral surface thereof;
a nut having a spiral groove formed at an inner peripheral surface thereof;
a raceway that is formed by the groove of the screw shaft and the groove of the nut that face each other;
a return passage that connects an ending point and a starting point of the raceway; and
a plurality of balls that are arranged in the return passage and the raceway,
wherein a ratio (R/D) of a radius (R) of an arc, which forms a cross-section of the groove of either the screw shaft or the nut, with respect to a diameter (D) of the ball is 51.0% or more and 52.0%, and
a solid lubricant film is formed on either a surface of the ball or a surface of a part which contacts with the ball.

As a second constitution of the invention, according to a second aspect of the invention, as set forth in the first aspect of the invention, there is provided the ball screw wherein
a surface hardness of the ball is higher than each of a surface hardness of the ball screw groove of the screw shaft and a surface hardness of the ball screw groove of the nut, and
the solid lubricant film is formed on the surface of the ball with a film thickness of 1 µm or more and 5 µm or less.
According to a third aspect of the invention, as set forth in the second aspect of the invention, there is provided the ball screw, wherein
the solid lubricant film is made of molybdenum disulfide or soft metal.
According to a fourth aspect of the invention, as set forth in the third aspect of the invention, there is provided the ball screw, wherein
the soft metal is selected from tin, gold, silver, zinc, indium, and alloys thereof.
According to a fifth aspect of the invention, as set forth in any one of the first through fourth aspects of the invention, there is provided the ball screw, wherein the surface hardness of the ball is HRC 63 or more.

As a third constitution of the invention, according to a sixth aspect of the invention, as set forth in the first aspect of the invention, there is provided the ball screw, wherein
cross-sectional shape of the groove of either the screw shaft or the nut is a Gothic arc (shape formed by connecting two arcs having the same radius and different centers),
the ratio (R/D) of a radius (R) of the arc, which forms the Gothic arc of the cross-section of the groove, with respect to the diameter (D) of the ball, is 51.0% or more and less than 52.0%, and
the solid lubricant film is formed on the surface of at least one of the groove of the screw shaft, the groove of the nut, and the ball.

According to this ball screw, load capacity can be increased by forming the cross-section of the groove of either the screw shaft or the nut in the shape of a Gothic arc, and setting the ratio (R/D) to 51.0% or more and 52.0% or less. Accordingly, the major axis of a contact ellipse between a ball and a groove that forms a raceway becomes longer, and consequently, a slip component becomes large. However, since a solid lubricant film is formed on the surface of at least one of the groove of the screw shaft, the groove of the nut, and the balls, excellent lubrication characteristics are ensured, and premature damage is prevented.

According to a seventh aspect of the invention, since a clearance between the ball and the raceway of the electric injection molding machine or the pressing machine is 5 µm or more and 70 µm, when the thickness of the solid lubricant film is set 0.5 µm or more and 3.0 µm or less, superior lubricating property is obtained.
According to an eighth aspect of the invention, as the solid lubricating film, films made by molybdenum disulfide or tin is exemplified.
According to a ninth aspect of the invention, it is preferable that a retaining piece is arranged between the balls.

As a fourth constitution of the invention, according to a tenth aspect of the invention, as set forth in the first aspect of the invention, there is provided a linear motion device, further including:
a retaining piece interposed between the balls; and
a circulating path that is formed in the linear motion body to circulate the balls from one end of the ball groove to the other end thereof,
wherein a film made of molybdenum disulfide, soft metal, or polymeric material is formed on at least a surface of the retaining piece that contacts with the balls.

As a fifth constitution of the invention, according to an eleventh aspect of the invention, as set forth in the first aspect of the invention, there is provided the ball screw according to Claim 1, wherein
the solid lubricating film made of at least one of molybdenum disulfide and an organic molybdenum compound is coated on an internal surface of the ball return passage.

According to a twelfth aspect of the invention, as set forth in the eleventh aspect of the invention, there is provided the ball screw, wherein the ball return passage is made of resin.
According to a thirteenth aspect of the invention, as set forth in the eleventh aspect of the invention, there is provided the ball screw, wherein the ball return passage is composed of a resinous member manufactured by injection molding.
According to a fourteenth aspect of the invention, as set forth in the eleventh aspect of the invention, there is provided the ball screw, wherein the ball return passage is made of metal.
According to a fifteenth aspect of the invention, as set forth in the eleventh aspect of the invention, there is provided the ball screw, wherein the ball return passage is composed of a metallic member manufactured by metal pressing.

### Effects of the Invention

Since the groove R ratio is set to 51 to 52%, and the solid lubricant film made of molybdenum disulfide, soft metal, etc. is formed on balls or surfaces contacting the balls by surface coating treatment, the surface pressure that acts on the balls and grooves at the time of high load can be suppressed. Also, the problem of short lifetime caused by an increase in a slip component that is generated by a spiral groove that is a characteristic peculiar to the ball screw, and by setting the groove R ratio small can be simultaneously solved by suppressing a tangential force, thereby obtaining a high-load and long-lifetime ball screw.

According to the ball screw of the invention, the surface hardness of the balls is set higher than both of the surface hardness of the ball screw groove of the screw shaft and the surface hardness of the ball screw groove of the nut, and the solid lubricant film is formed on the surface of each of the balls with a film thickness of 1 µm or more and 5 µm or less. Generation of wear or damage of the balls can be more surely prevented, thereby obtaining a ball screw with long lifetime and high reliability.

According to the linear motion device of the invention, the retaining piece having the film with lubricity formed on the surface thereof that contacts a ball is interposed. Therefore, the linear motion device had no malfunction, and stably operates over a prolonged period of time.

Even if the ball screw of the invention is used under the conditions where high load is applied and torsional moment load is applied, the ball screw has little damage, such wear or exfoliation, and has long lifetime.

### Brief Description of the Drawings

FIG. 1 is a top view showing an example of a ball screw that is a kind of a linear motion device.
FIG. 2 is a sectional view taken along a line AA of FIG. 1.
FIG. 3 is an enlarged view shown along a screw groove of the ball screw shown in FIG. 1.
FIG. 4 is a sectional view showing an example of a retaining piece. FIG. 5 is a sectional view showing another example of the retaining piece.
FIG. 6 is a sectional view showing still another example of the retaining piece.
FIG. 7 is a perspective view showing an example of a linear guide that is another example of the linear motion device.
FIG. 8 is torque measurement data of Embodiment 7. FIG. 9 is torque measurement data of Embodiment 8.
FIG. 10 is torque measurement data of Embodiment 9.
FIG. 11 is torque measurement data of Comparative Example 9.
FIG. 12 is torque measurement data of Comparative Example 7.
FIG. 13 is a view showing the cross-section of grooves of a screw shaft and a nut of the ball screw of the present embodiment.
Fig. 14 is a perspective view showing an example of a ball screw.
Fig. 15 is a sectional view showing an example of a ball screw.
FIG. 16 is a partial sectional view showing an example of a ball screw having a retaining piece.
FIG. 17 is a sectional view showing an example of a retaining piece.
FIG. 18 is a sectional view showing an example of a retaining piece.
FIG. 19 is a section view showing principal parts surrounding an end of a tube.

### Explanation of Reference Numerals

1: BALL SCREW
3: SCREW SHAFT
3a: MALE SCREW GROOVE
5: FEMALE SCREW
5a: FEMALE SCREW GROOVE
7: NUT
9: BALL
15: TUBE
21: RETAINING PIECE
23: CONCAVE SURFACE
77: BALL ROLLING PASSAGE
101: SCREW SHAFT
111: GROOVE (SPIRAL GROOVE) OF SCREW SHAFT
102: NUT
121: GROOVE (SPIRAL GROOVE) OF NUT
122: THROUGH-HOLE OF NUT
103: BALL
104: TUBE (RETURN PASSAGE)
107: RETAINING PIECE
170: RETAINING PIECE
K: RACEWAY

### Best Mode for Carrying out the Invention

Hereinafter, embodiments of a ball screw of the invention will be described in detail with reference to the accompanying drawings.

### (First Embodiment)

Although the invention is not limited in the kind or configuration of a ball screw itself, the invention mainly applies to a ball screw that is comparatively large and used under high load, like those used for the electric injection molding machines, the pressing machines, etc. An example of the ball screw is shown in FIG. 1 (top view) and FIG. 2 (sectional view taken along the line AA of FIG. 1). As shown in these figures, the ball screw 1 includes, as its main constructional elements, a screw shaft 3 at an outer periphery of which a male screw groove 3a is spirally formed, a cylindrical nut 7 at an inner periphery of which a female screw groove 5a that faces the male screw groove 3a is spirally formed, and a number of balls 9 that are interposed in a ball rolling passage formed between the male screw groove 3a and the female screw groove 5a. One end of the nut 7 is formed with a flange 11 to be fixed to a table (not shown), etc., and a part of the outer peripheral surface of the nut (upper part in Fig. 2) is cut to form a planar portion (cutout surface) 13). Further, a pair of front and rear tubes 15 that serve as circulating paths of the balls 9 and are made of steel pipes are secured to the nut 7, and the balls 9 that have moved axially while they rotate between both the grooves 3a and 5a circulate through the tubes 15. In addition, in these figures, reference numeral 17 designates a tube holder for fixing the tubes 15 onto the planar portion 13 of the nut 7, and reference numeral 19 designates plastic seals for protection against dust adhered to both ends of the nut 7.

In the invention, the surface hardness of the balls 9 is set higher than the surface hardness of each of the male screw groove 3a and the female screw groove 5a. Although the surface hardness of the balls 9 can be set relatively, damage and wear can be further suppressed by setting the surface hardness to HRC 63 or more. In order to satisfy the relationship of such surface hardness, it is desirable to select the individual materials of the balls 9, the screw shaft 3, and the nut 7, or it is desirable to perform surface treatment, such as heat treatment.

Further, a lubricating film made of molybdenum disulfide or a soft metal is formed on the balls 9. As the soft metal, tin, gold, silver, zinc, indium, and alloys thereof are preferable from the viewpoint of lubricating effects or film formability. The thickness of the lubricating film is set to 1 µm or more and 5 µm or less in consideration of high-load applications. If the film thickness is less than 1 µm, there is a possibility that the ball screw may be inferior in durability when being used for high-load applications. Although the ball screw for high-load applications generally does not require the dimensional accuracy of the balls 9 unlike the ball screw (refer to Patent Document 2) that applies preload to enhance feed accuracy, if the thickness of a lubricating film exceeds 5 µm, any troubles will be caused. In addition, since the molybdenum disulfide or soft metal that form a lubricating film is solid lubricant, it exhibits a lubricating action even if it is exfoliated, and mixed into grease.

Although there is no limitation to a method of forming a lubricating film on the balls 9, a shot-peening method is preferable for forming a comparatively thick film while controlling the film thickness thereof, as described above. This shot-peening method is a method of accelerating and injecting pellets with a particle size of about several tens of micrometers called a shot material towards a surface to be processed from a projection device, and causing the pellets to collide with the surface to be processed at high speed. In the invention, molybdenum disulfide or soft metal is used for the shot material, and injected towards the surface of the balls 9.

In addition, the surface of the film tends to become coarse by the shot-peening method. Therefore, if required, the surface of the lubricating film may be smoothened. Embodiments

Although the invention will be further described below taking embodiments and comparative examples, the invention is not limited to the following embodiments at all.
[Embodiments 1 to 5 and Comparative Examples 1 to 4]

Various balls that are different in surface hardness and lubricating film were built into a ball screw (the specification of which is as follows) made by NSK Ltd., an endurance test was performed thereon by a ball screw endurance testing machine made by NSK Ltd., and then comparison of the lifetime thereof was performed. In addition, a film was formed by using a shot-peening machine on the market.
- Ball screw "BS6316-10.5 (Bearing number: 63 x 16 x 300 - Ct7) made by NSK Ltd.
- Shaft diameter: 65 mm
- Lead: 16 mm
- BCD: 65 mm
- Ball diameter: 12.7 mm
- Number of effective turns: 3.5 turns x 3 rows
- Material and heat treatment of screw shaft and nut: SCM420H and carburizing heat treatment
- Hardness of rolling surfaces of screw shaft and nut: HRC62
- Dynamic load rating of ball screw: 450 kN
- Test load: 300 kN (0.67Ca)
- Torsional moment: 4.2 kN·m
- Lubrication: YS2 grease made by Lube Corp. is automatically supplied by an automatic grease supply apparatus.

In the endurance test, the ball screw was periodically disassembled, and a travel distance was found until any exfoliation occurred in a ball or raceway groove. When any exfoliation occurred was determined to be the lifetime of the ball screw. The test results are shown in Table 1. In Table 1, the lifetime is a lifetime ratio when the lifetime of Comparative Example 1, i.e., a conventional actuator ball screw for high-load applications is set to 1.

**[Table 1]**

| | Surface Hardness of Ball (HRC hardness) | Film Treatment, Film Thickness | Lifetime (Ratio to Lifetime of Comparative Example 1) | Place of Exfoliation |
|---|---|---|---|---|
| Embodiment 1 | 64 | MoS₂, 1.2 µm | 1.68 | Rolling Surface |
| Embodiment 2 | 63 | MOS₂, 4.8 µm | 1.72 | Rolling Surface |
| Embodiment 3 | 64 | Sn, 2.0 µm | 1.58 | Rolling Surface |
| Embodiment 4 | 63 | Sn, 3.6 µm | 1.65 | Rolling Surface |
| Embodiment 5 | 66 | Sn, 4.9 µm | 1.48 | Rolling Surface |
| Comparative Example 1 | 62 | None | 1 | Ball |
| Comparative Example 2 | 64 | None | 1.01 | Rolling Surface |
| Comparative Example 3 | 62 | MoS₂, 0.8 µm | 1.03 | Ball |
| Comparative Example 4 | 60 | None | 0.65 | Ball, Rolling Surface |

It was assumed in the embodiments of Table 1 that R/D ratio is 52%.
Embodiment 1 had a specification that a MoS₂ film of 1.2 µm was formed on balls with a surface hardness of HRC64. Here, the lifetime of a ball screw was extended 1.68 times, and exfoliation occurred in the rolling surface of a screw shaft.
Further, Embodiment 2 had a specification that a MoS₂ film of 4.8 µm was formed on balls with a surface hardness of HRC63. Here, the lifetime of a ball screw was extended 1.72 times, and exfoliation occurred in the rolling surface of a screw shaft.
Further, Embodiment 3 had a specification that an Sn film of 2.0 µm was formed on balls with a surface hardness of HRC64. Here, the lifetime of a ball screw was extended 1.58 times, and exfoliation occurred in the rolling surface of a screw shaft.
Further, Embodiment 4 had a specification that an Sn film of 3.6 µm was formed on balls with a surface hardness of HRC63. Here, the lifetime of a ball screw was extended 1.65 times, and exfoliation occurred in the rolling surface of a screw shaft.
Further, Embodiment 5 had a specification that an Sn film of 4.9 µm was formed on balls with a surface hardness of HRC65. Here, the lifetime of a ball screw was extended 1.48 times, and exfoliation occurred in the rolling surface of a screw shaft.

By making the surface hardness of the balls higher than the surface hardness of the rolling surfaces, and forming a solid lubricating film with a thickness of 1 µm to 5 µm on the balls, in accordance with the invention as described above, the lifetime of the ball screws becomes long. This is inferred that metallic contact between the balls was prevented by the solid lubricating film even if oil film discontinuity was caused, and damage or wear of the balls was suppressed because since the surface roughness of the balls was higher than the surface roughness of the rolling surfaces. Further, the surface hardness of the balls is higher than the surface hardness of the rolling surfaces. Thus, in all the embodiments, exfoliation occurs on the side of the rolling surfaces.

In contrast, Comparative Example 1 has the specification of a conventional general actuator ball screw for high-load applications. That is, although Comparative Example 2 has a specification using balls that have the same surface hardness (HRC62) as the surface hardness of a rolling surface, and on which a solid lubricating film is not formed, the balls come into metallic contact with each other, whereby the balls are worn, and exfoliated prematurely.
Further, in Comparative Example 2, the surface hardness of balls is made higher than the surface hardness of a ball screw groove of a screw shaft or a nut. However, since a solid lubricating film is not formed, the balls cause metallic contact therebetween, whereby the surface roughness of the balls degrades, and exfoliation occurs in the rolling surface. Although the surface hardness of the balls should increase and resistance to wear should improve, any effects do not appear, and the lifetime of the ball screw is equal to that of Comparative Example 1.
Further, although Comparative Example 3 has a specification that a solid lubricating film is formed in addition to the configuration of Comparative Example 1, the surface hardness of the balls is equal to the surface hardness of a rolling surface. Thus, there are few improvements in resistance to wear of the balls, and the extension of the lifetime is slight.
Further, although Comparative Example 4 has a specification that the surface hardness of balls is lower than the surface hardness of a rolling surface using the balls on which a solid lubricating film is formed, the balls cause metallic contact therebetween, whereby the surface roughness of the balls degrades, which damages the rolling surface. Further, since the surface hardness of the balls is lower than the surface hardness of the rolling surface, exfoliation occurs even in the balls. Therefore, the lifetime of the ball screw in this comparative example is quite shorter even as compared with the lifetime of Comparative Example 1.

### (Second Embodiment)

FIG. 13 is a view showing the cross-section of grooves of a screw shaft and a nut of the ball screw of the present embodiment.
The cross-section of a groove 111 of a screw shaft 101 is formed in the shape of a Gothic arc, i.e., in such a shape that two arcs having the same radius (R₁) and having different centers O₁₁ and O₁₂ are connected to each other. The cross-section of a groove 121 of a nut 102 is also formed in the shape of a Gothic arc, i.e., in such a shape that two arcs having the same radius (R₂ = R₁) and having different centers O₂₁ and O₂₂ are connected to each other. Further, the ratio (R/D) of the radius (R) of the arcuate cross-section of the groove 111 or 121 with respect to the diameter (D) of the balls 102 is 51.0% or more and 52.0% or less.

Also, a film made of molybdenum disulfide is formed on the surface of the balls 103 with a thickness of 0.5 µm and 3.0 µm or less. Further, the clearance between a raceway formed in the grooves 111 or 121 of the screw shaft 101 or the nut 102, and the balls 103 is 5 µm or more and 70 µm or less. Accordingly, the ball screw of the present embodiment is larger in load capacity than and is longer in lifetime than a conventional ball screw.

In addition, in the present embodiment, a solid lubricant film is formed on the balls 103. However, a solid lubricant film is not formed on the balls 103, but the solid lubricant film may be formed on any one or both of the groove 111 of the screw shaft 101 and the groove 121 of the nut 102, or a solid lubricant film may be formed on any one or both of the balls 103, and the groove 111 of the screw shaft 101 or the groove 121 of the nut 102. Further, the material of the solid lubricant film may be materials other than molybdenum disulfide (for example, those described in the aforementioned Patent Document 2).

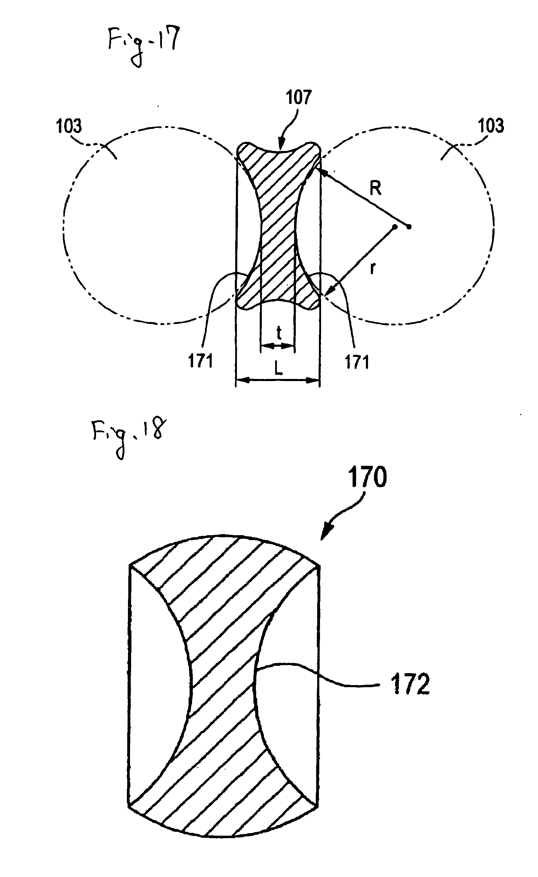

Further, although the present embodiment has been described about a ball screw having a whole ball structure in which balls contact each other, the ball screw of the invention, as shown in FIG. 16, may have a structure in which a retaining piece 107 is arranged between balls 103, and the balls 103 are held by the retaining piece 107.
The retaining piece 107 can be obtained by forming synthetic resins in a predetermined shape. The available synthetic resins may include, for example, polyamide resins, such as polyamide 6, polyamide 66, polyamide 64, and aromatic polyamide; polyacetal resins, polybutylene terephthalates, polybutylene-terephthalate-based elastomers, polybutylene-naphthalate-based elastomers, etc. Further, glass fibers, carbon fibers, titanium fibers, potassium whiskers, aluminum borate whiskers, etc. that serve as reinforcing agents may be blended with the synthetic resins.

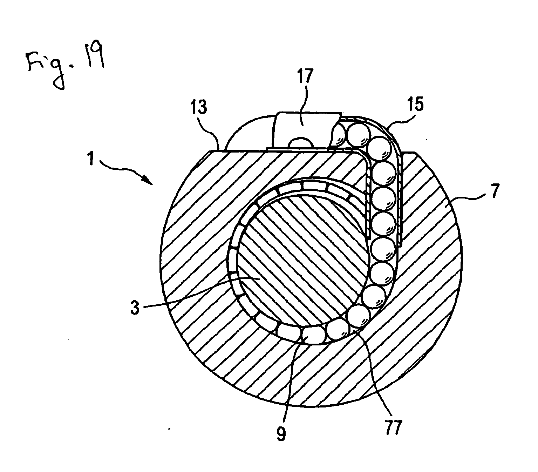

As a shape of the retaining piece, for example, those shown in FIGS. 17 and 18 are adaptable. The retaining piece 107 of FIG. 17 is formed substantially in the shape of a cylinder, and concave surfaces 171 that receive balls 103 are formed in two bottom surfaces of the cylinder. In this retaining piece 107, the shape of each of the concave surfaces 171 is formed in the shape of a spherical surface in which the radius of curvature R is larger than the radius r of the balls 103. Therefore, the thickness t of a central part of the retaining piece made smaller than the thickness L of a peripheral edge of the retaining piece 107. Accordingly, a number of balls 103 can be disposed within a raceway K, and the contact area between the balls 103 and the retaining piece 107 can be reduced, so that sliding resistance can be reduced.

The concave surface 171 of the retaining piece 107 can be formed in the shape of a Gothic arc obtained by connecting two arcs together, or can also be formed in a conical shape. Further, a through-hole may be in the concave surface 171, and lubricant may be made to be held within the through-hole so that the contact resistance against the balls 103 may be reduced. When the retaining piece 107 passes through the raceway K and the tubes 104, the external diameter of the retaining piece 107 is set to be smaller than the diameter of the balls 103 so that the retaining piece may not interfere with the raceway K, the tubes 104, and a connection, but the ball may circulate smoothly. Specifically, it is preferable that the external diameter of the retaining piece 107 be set to be 0.5 times to 0.9 times the diameter of the balls 103.

The retaining piece 170 of FIG. 18 has a shape in which two sides of a spherical body that are opposite to each other are removed in concave spherical surfaces 172. Here, the outer periphery of the spherical body becomes a convex surface.
Further, balls may be held by a member that connects a plurality of retaining pieces together by a connecting member. Further, the ball screw of the invention is suitable for applications, such as brakes of automobiles and continuous variable transmissions (belt-type CVT) of automobiles, other than electric injection molding machines or pressing machines.
[Embodiment 6 and Comparative Example 5]

A lifetime test was performed by changing, as shown in the following Table 1, the ratio (R/D) of the ball diameter (D) with respect to the radius (R = R₁ = R₂) of an arc of a Gothic arcuate cross-section of a screw shaft and a nut, and the material and film thickness of a solid lubricant film, using a single nut tube type ball screw "BS6316-10.5" made by NSK Ltd.
A molybdenum disulfide film and a tin film were formed by using a shot-peening apparatus on the market, and by adjusting processing time so that a film with a predetermined thickness may be formed on balls. The thicknesses of these films were calculated by measuring ball diameters before and after formation of the films, using an electric dial gage, and by dividing the difference between the ball diameters by two.

The specifications of "BS6316-10.5" are as follows:
Number of effective turns: 3.5 x 3 rows;
External diameter of screw shaft: 65 mm;
Lead: 16 mm;
Ball diameter: 12.7 mm;
BCD: 65 mm; and
Simple substance gap: 20 to 30 µm.
An endurance lifetime test was performed by putting each ball screw in a ball screw endurance lifetime testing machine made of by NSK Ltd, and reciprocating the ball screw under the following conditions:
Test load (axial load): 300 kN;
Stroke: 80 mm;
Rotational speed: 500 rpm;
Temperature: the outer peripheral portion of a nut is kept at a temperature of 80°C; and
Lubricant: "YS2 Grease" made by Lube Corp. is automatically supplied by an automatic grease supply apparatus.
This test was performed by measuring the travel distance until exfoliation occurred in the groove of the screw shaft or the nut, or the balls as the lifetime. Next, relative values when the lifetime of Sample No.10 was set to "1" were calculated from the lifetime acquired in each sample. These results are also shown in the following Table 2.

**[Table 2]**

| No. | R/D (%) | Solid Lubricant Film | | Lifetime |
|---|---|---|---|---|
| | | Material | Thickness (µm) | (Relative Value) |
| 1 | 51.3 | MoS₂ | 0.4 | 1.11 |
| 2 | 51.7 | MoS₂ | 1.8 | 1.37 |
| 3 | 51.2 | MoS₂ | 1.3 | 1.62 |
| 4 | 51.5 | MoS₂ | 2.6 | 1.58 |
| 5 | 51.5 | MoS₂ | 3.6 | 1.20 |
| 6 | 51.4 | MoS₂ | 5.7 | 1.11 |
| 7 | 51.2 | Sn | 1.5 | 1.62 |
| 8 | 51.9 | Sn | 2.7 | 1.28 |
| 9 | 51.8 | Sn | 1.9 | 1.67 |
| 10 | 52.1 | None | | 1 |
| 11 | 51.6 | None | | 0.95 |
| 12 | 53.2 | MoS₂ | 2.2 | 1.06 |
| 13 | 52.5 | Sn | 2.8 | 1.02 |

As shown in this table, the ball screws of Nos.1 to 10 corresponding to Example 6 of the invention became longer in lifetime than those of Nos.10 to 13 corresponding to Comparative Example 5. Among Nos.1 to 9, the lifetime of Nos. 2 to 4 and 7 to 9 the film thickness of a solid lubricant film of which is 1.5 µm or more and 2.7 µm was 1.28 to 1.68 times the lifetime of No. 10, whereas the lifetime of No. 1 whose film thickness is 0.4 µm, the lifetime of No. 5 whose film thickness is 3.6 µm, and the lifetime of No. 6 whose film thickness is 5.7 µm were 1.11 to 1.20 times the lifetime of No.10. As can be understood from this result, it is preferable that the thickness of the solid lubricant film is the 0.5 µm to 3.0 µm.

It is inferred that, if the thickness of the solid lubricant film was 0.4 µm, since the solid lubricant film exfoliated prematurely, and thereby the lubricating action by the solid lubricant film was lost prematurely, lifetime improvement effects were not obtained so much. It is also inferred that, if the thickness of the solid lubricant film exceeds 3.0 µm, since the exfoliated solid lubricant is excessively mixed into grease as foreign matters, lifetime improvement effects were not obtained so much.
In Nos.12 and 13, solid lubricant films were formed with a thickness 2.2 to 2.8 µm. However, since the R/D deviated from the range of the invention, the lifetime of Nos. 12 and 13 became approximately equal to the lifetime of No.10. In No. 11, the R/D was set to 51.6%. However, since any solid lubricant film was not formed, the lifetime of No. 11 was shorter than the lifetime of No.11.

### (Third Embodiment)

The invention is not particularly limited in the kind of a linear motion device, and the concrete configuration or structure thereof, and can be applied to a ball screw, a linear guide device, a linear bearing device, etc., that include retaining pieces.

As the ball screw, a ball screw having the configuration shown in FIGS. 1 and 2 can be illustrated. In the invention, a film having lubricity preferably over its whole surface, and specifically, a film that is made of molybdenum disulfide, soft metal, or a polymeric material, is formed on at least surface portions of a retaining piece 21 that contacts balls 9. As the soft metal, tin, gold, silver, lead, zinc, indium, alloys thereof, white metal, etc. are preferable. Further, as the polymeric material, PTGE, PTA, etc. are preferable. These films are mixed into grease, etc. to exhibit a lubricating action, even if they are exfoliated.

The film thickness of a film preferably has 1 µm to 5 µm so that the film can surely exhibit its effects over a prolonged period of time. If a film is formed with a small film thickness of less than 1 µm, there is a possibility that durability may deteriorate. Even if a film is formed with a large film thickness that exceeds 5 µm, the effects are saturated, and become uneconomical.

Although there is no limitation to a method of forming a film, a shot-peening method is preferable for forming a comparatively thick film while controlling the film thickness thereof, as described above. This shot-peening method is a method of accelerating and injecting pellets with a particle size of about several tens of micrometers called a shot material towards a surface to be processed from a projection device, and causing the pellets to collide with the surface to be processed at high speed. In the invention, molybdenum disulfide or soft metal is used for the shot material, and injected towards the retaining piece 21. In addition, since the surface of the film tends to become coarse by the shot-peening method, the surface of the film may be smoothened, if required.

The retaining piece 21 can be made of synthetic resins, and specifically obtained by molding polyamide resins, such as polyamide 6, polyamide 66, polyamide 46, and aromatic polyamide; polyacetal resins, polybutylene terephthalates, polybutylene-terephthalate-based elastomers, polybutylene-naphthalate-based elastomers, etc, in a predetermined shape. Further, for the purpose of reinforcement, glass fibers, carbon fibers, titanium fibers, potassium whiskers, aluminum borate whiskers, etc. may be blended with the synthetic resins.

Further, although the retaining piece 21 is not particularly limited in its shape, the retaining piece, as shown in a cross-sectional view of Fig. 4, can be formed in the shape of a disk on both sides of which concave spherical surfaces 23 having a larger radius of curvature R than the radius r of the balls 9 are formed. By adopting such a shape, the thickness t of a central part with respect to the whole thickness L becomes small, and consequently, more balls 9 can be disposed. Also, the contact area between each ball 9 and the retaining piece 21 can be reduced, thereby minimizing sliding resistance.

In addition, the concave spherical surface 23 can be formed in the shape of a Gothic arcuate concave surface formed by causing two arcs to intersect each other at their intermediate parts, or can also be formed in the shape of a conical concave surface. Further, a through-hole may be in the concave surface, and lubricant may be made to be held within the through-hole so that the contact resistance against the ball 9 may be reduced.

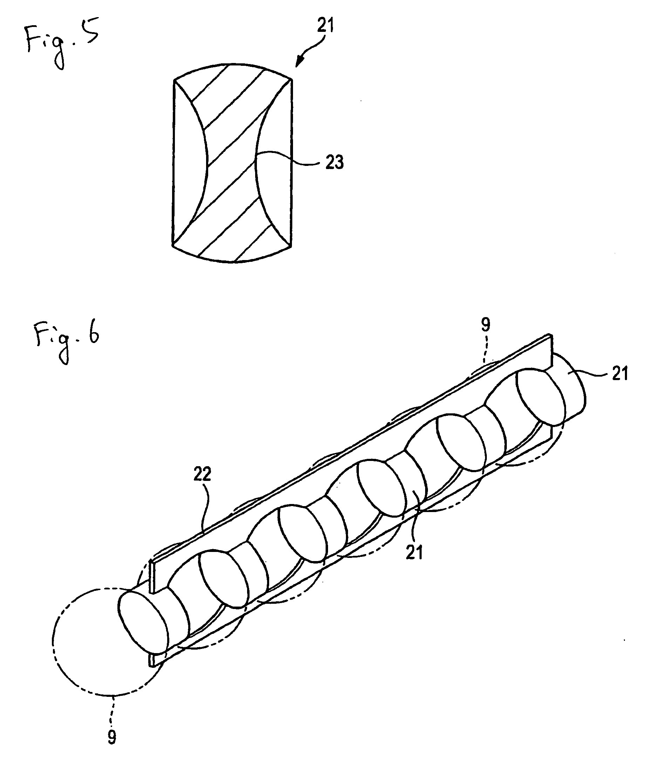

As the retaining piece 21, in addition to the above, a retaining piece having a cross-sectional shape as shown in FIG. 5, a retaining piece obtained by connecting a plurality of retaining pieces 21 by a connecting member 22 as shown in FIG. 6, etc. can be used. Any of those retaining pieces 21 similarly has the above film formed thereon.

As described above, although the ball screw has been illustrated and described in conjunction with the embodiments of the invention, operability can be improved by interposing the same retaining piece even in a linear guide that is another linear motion device.

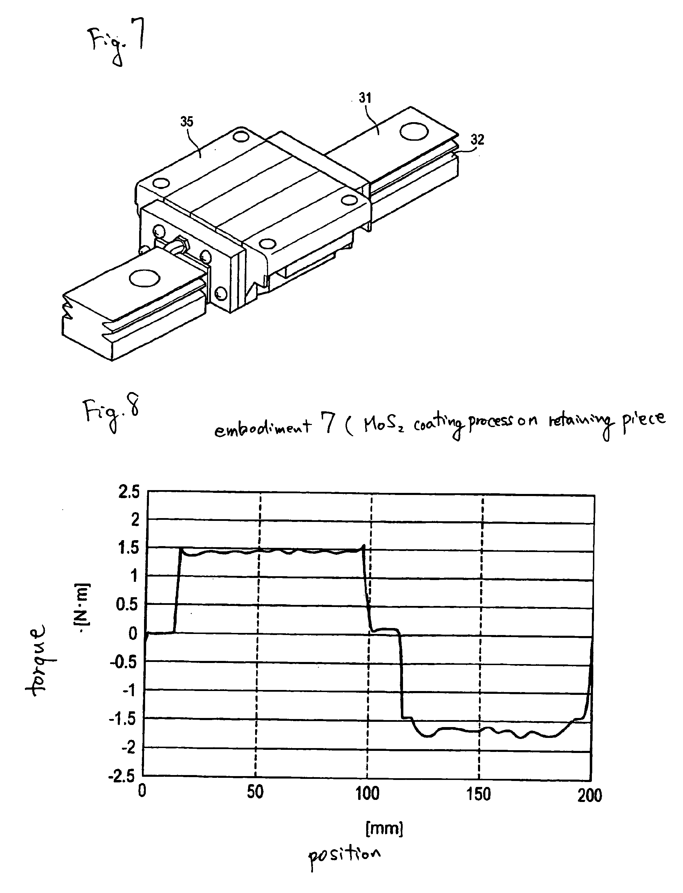

For example, an example of the linear guide is shown in FIG. 7. This linear guide includes a guide rail 31 having a rolling groove 32 on its external surface, and a slider 35 assembled across the guide rail 31. A ball circulation passage is formed between the inside of the slider 35 and the rolling groove 32 of the guide rail 31, and balls, and retaining pieces on while a film is formed as described above are rollably accommodated inside the ball circulation passage.
[Embodiments 7 to 9 and Comparative Examples 6 to 7]

Retaining pieces having different specifications as shown in Table 3 were assembled into ball screws (whose specifications are as follows) made by NSK Ltd., torque measurement was performed, and operability was evaluated. The retaining pieces were made of resin, and a shot-peening machine on the market was used to form a film, using as a shot material, molybdenum disulfide particulates with a mean particle diameter of 1 µm in Example 7, tin particulates with a mean particle diameter of 2.5 µm in Example 8, PTFE particulates with a mean particle diameter of 3 µm in Example 9. Further, Comparative Example 6 has a whole ball specification in which retaining pieces are not interposed, and Comparative Example 7 has a specification in which a film is not formed, but retaining pieces are used as they are.
- Ball screw "BS3610-2.5 (Bearing number: 36 x 10 x 300 - Ct7) made by NSK Ltd.
- Shaft diameter: 36 mm
- Lead: 10 mm
- BCD: 37 mm
- Ball diameter: 6.35 mm
- Number of effective turns: 2.5 turns x 1 row
- Number of rotations for torque measurement: 10 rpm
- Stroke: 100 mm
- Test load: axial load of 8800 N is applied by a double-nut-type spring
- Lubrication: YS2 grease made by Lube Corp. is automatically supplied by an automatic grease supply apparatus.

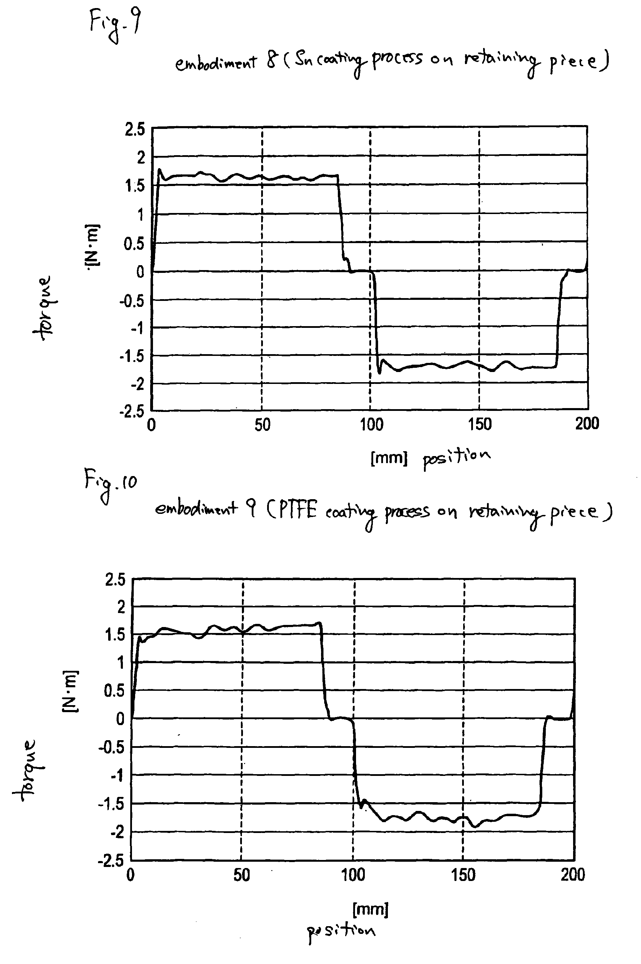

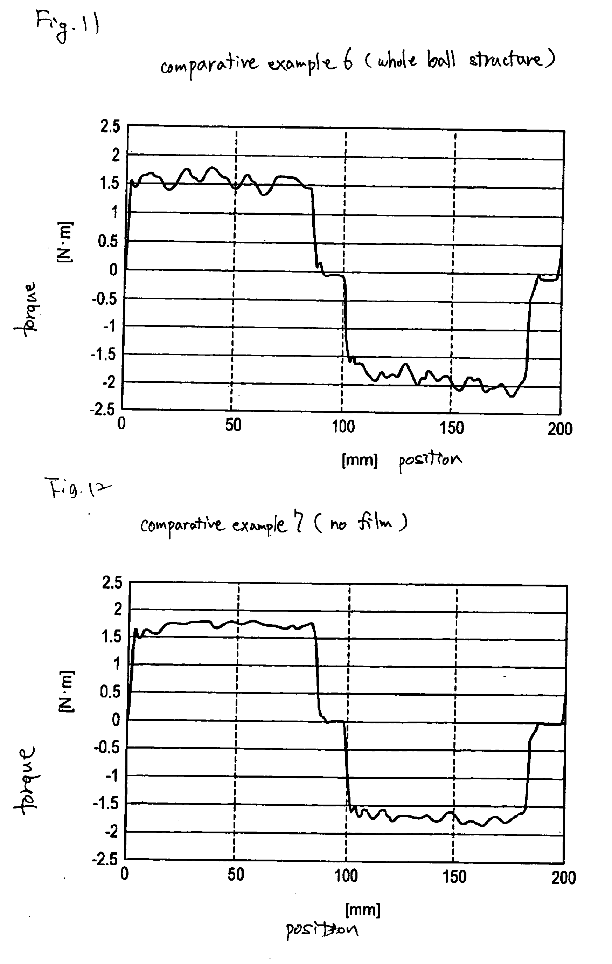

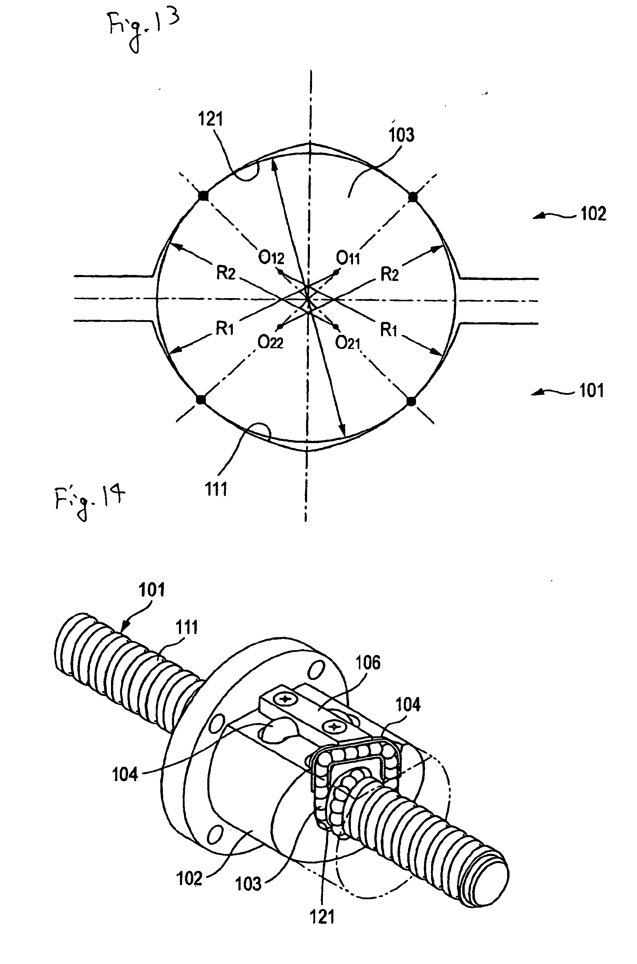

The measurement data of torque was shown in FIGS. 8 to FIG. 12, Here, operability was determined by the margin of fluctuation of torque, and the operability was evaluated in four steps of "X" → "Δ" →"○" "⊚" according to inferiority. The results are shown in Table 3.

**[Table 3]**

| | Retaining piece | Evaluation of Operability | Torque Measurement Data |
|---|---|---|---|
| Embodiment 7 | Molybdenum Disulfide film | ⊚ | FIG. 8 |
| Embodiment 8 | Tin Film | ⊚ | FIG. 9 |
| Embodiment 9 | PTFE Film | ○ | FIG. 10 |
| Comparative Example 6 | No Retaining piece (Whole Ball Specification) | X | FIG. 11 |
| Comparative Example 7 | No Film | Δ | FIG. 12 |

| | | | |
|---|---|---|---|
| Note) evaluation of operability: bad operability "X"→ "Δ" → "○" → "⊚" good operability | | | |

As shown in Table 3, Comparative Example 6 in which retaining pieces are not interposed has the worst operability. Even among examples having a specification in which retaining pieces are interposed, no film is formed in Comparative Example 7. Therefore, there are little improvements in operability.
On the other hand, according to the invention, operability is significantly improved in all the individual examples in which retaining pieces having a film made of molybdenum disulfide, tin, and PTFE formed thereon are interposed.

### (Fourth Embodiment)

FIG. 19 is a section view showing principal parts surrounding an end of a tube.
As shown in FIGS. 1, 2, and 19, the ball screw 1 includes a screw shaft 3 having a spiral groove 3a in an outer peripheral surface thereof, a nut 7 having a spiral groove 5a facing the groove 3a of the screw shaft 3 in an inner peripheral surface thereof, and a plurality of balls 9 that are rollably loaded into a spiral ball rolling passage 77 formed by both the grooves 3a and 5a. Also, when the shaft 3 and the nut 7 screwed to the screw shaft 3 are caused to rotate relative to each other via the balls 9, the shaft 3 and the nut 5 will be axially moved relative to each other by the rolling of the balls 9. In addition, the cross-sectional shape of the grooves 3a and 5a may be arcuate, or Gothic arcuate.

A part of the outer peripheral surface of the nut 7 is cut away, and is formed with a planar portion 13. Also, a tube 15 that allows a starting point and an ending point of the ball rolling passage 77 to communicate with each other so as to form an endless ball circulation passage is fixed to the planar portion 13 by a tube holder 17. When a ball 9 rotates around the screw shaft 3 several times while moving through the ball rolling passage 77, and then reaches the ending point of the ball rolling passage 77, the ball 15 is scooped up from one end of the tube 15, passes through the tube 15, and is returned to the starting point of the ball rolling passage 77 from the other end of the tube 15. As such, since the ball 9 that rolls through the ball rolling passage 77 is infinitely circulated by the tube 15, the screw shaft 3 and the nut 7 can be continuously moved relative to each other.

In addition, the tube 15 is equal to a ball return passage that is a constituent element of the invention. Further, although the material of the tube 15 is not particularly limited, resin and metal are preferable. The ball return passage may be made by shaving. Otherwise, the ball return passage may be made by molding in a case where the material is resin, or may be made by pressing in a case where the material is metal.
The internal surface of the tube 15 is coated with a solid lubricating film (not shown) that is made of either molybdenum disulfide or an organic molybdenum compound. This solid lubricating film can be further coated on groove surfaces of both the grooves 3a and 5a. Since such a solid lubricating film is provided, damages, such as wear and exfoliation, hardly occur in the internal surface of the tube 15, even if the ball screw 1 is used under the conditions that a high load is applied such that torsional moment load is exerted, and balls 9 are rubbed against the internal surface of the tube 15 by an excessive force. Consequently, poor circulation of the balls 9 hardly occurs.

Further, since worn powder and exfoliated powder is hardly generated from the internal surface of the tube 15, premature exfoliation of the grooves 3a and 5a or balls 9 caused by biting of foreign matters hardly occurs. Consequently, the ball screw 1 has a long lifetime. Since exfoliated powder of a solid lubricating film is diffused in grease and acts as solid lubricant even if the solid lubricating film is exfoliated by being rubbed against the balls 9, the lubricating action of grease improves.

Such a ball screw 1 can be suitably used for a mold clamping mechanism of a mold clamping apparatus assembled into the electric injection molding machine or the pressing machine. That is, such a ball screw is suitable as a ball screw in a mold clamping mechanism that drives the ball screw by an electric motor to thereby perform mold clamping of a mold clamping apparatus. In addition, the ball screw of the invention is not limited to the above applications.
Concrete examples of the organic molybdenum compound may include a molybdenum dialkyl dithiocarbamate sulfide and a molybdenum dialkyl phosphorodithioate sulfide. However, the solid lubricating film may be made of soft metal, polymeric material, metal oxide, metal nitride, metal carbide, clay minerals, lead zirconium titanate (PZT), and solid lubricant.

Concrete examples of the soft metal may include gold, silver, lead, zinc, tin, and indium. Further, concrete examples of the polymeric material may include polytetrafluoroethylene (PTFE) and perfluoroalkoxy fluororesin (PTA). Moreover, concrete examples of the metal oxide may include SiO₂, Al₂O₃, MgO, TiO₂, and ZnO. Concrete examples of the metal nitride may include Si₃N₄, ZrN, CrN, and TiAlN. Concrete examples of the metal carbide may include SiC, TiC, and WC. Concrete examples of the clay mineral may include bentonite, smectite, and mica. Concrete examples of the solid lubricant may include graphite, BN, and WS₂.

Although the method of forming the solid lubricating film is not particularly limited, a method of making particulates of molybdenum disulfide or organic molybdenum compound collide with a surface to be processed is preferable. Methods of blasting particulates together with gas, such as a shot-peening method and a sand-blasting method, and a centrifugal shooting method can be used for such processing.
In addition, the grease (not shown) that lubricates the groove surfaces of both the screw grooves 3a and 5a and the surfaces of the balls 9 is arranged within the ball rolling passage 7. Although the kind of the grease is not particularly limited, the grease that uses mineral oil, ester-based synthetic oil, ether-based synthetic oil, hydrocarbon-based synthetic oil, etc. can be exemplified as base oil. The grease may include additives, such as a sulfur-based extreme-pressure agent, a sulfur-phosphorus-based extreme-pressure agent, and an organometallic compound-based extreme-pressure agent including sulfur, phosphorus, and zinc.

Further, dust seals 19 made of plastic may be respectively arranged at both ends of the nut 7. Then, foreign matters are prevented from entering the nut 7 from the outside. Moreover, as shown in FIG. 2, a retaining piece 21 that prevents any contact between balls 9 may be interposed between adjacent balls 9. Then, since competition between the balls 9 is eliminated, movement of the balls 9 is performed more smoothly. Consequently, the circulation performance of the balls 9 and the feed accuracy of the ball screw 1 are excellent, and generation of noises or vibration are also further suppressed. Although the material of the retaining piece 21 is not particularly limited, it includes, for example, polyamide or fluororesin itself that has a lubricating action, or polyethylene in which lubricating oil is impregnated.
[Embodiments 10 to 13 and Comparative Examples 8 to 9]

The invention will be described below by showing more concrete embodiments. An endurance test was performed by mounting the ball screw BS6316-10.5 (Bearing number: 63 x 16 x 300 - Ct7) made by NSK Ltd., which has almost the same configuration as the aforementioned ball screw 1, on the ball screw endurance testing machine made by NSK Ltd.
The specifications of this ball screw are as follows.
- The diameter of screw shaft: 63 mm
- Lead: 16 mm
- Diameter of ball: 12.7 mm
- Number of turns: 3.5 turns x 3 rows
- Axial load: 300 kN
- Torsional moment load: 4.2 kN·m
- Retaining piece: Provided
In the ball screws of Embodiments 10 to 13 and Comparative Examples 8 and 9 that are provided for the endurance test, the material of tubes, and the kind of solid lubricating films are different from each other (see Table 4). In addition, lubrication of the ball screws was performed by automatically supplying the YS2 grease made by Lube Corp. by an automatic grease apparatus.

**[Table 4]**

| | Material of Tube | Kind of Solid Lubricating Film | Lifetime |
|---|---|---|---|
| Embodiment 10 | Metal | Molybdenum Disulfide | 1.35 |
| Embodiment 11 | Resin | Molybdenum Disulfide | 1.50 |
| Embodiment 12 | Metal ^{*)} | Organic Molybdenum Compound | 1.45 |
| Embodiment 13 | Resin | Organic Molybdenum Compound | 1.30 |
| Comparative Example 8 | Metal | None | 1.0 |
| Comparative Example 9 | Resin | None | 1.05 |

| | | | |
|---|---|---|---|
| *) Pressed metal product | | | |

Next, the endurance test of the ball screws will be described. A balls screw was rotated after being mounted on the ball screw durable lifetime testing machine made by NSK Ltd., and then a travel distance until exfoliation occurred in a screw groove of a screw shaft, a screw groove of a nut, or balls or until malfunction of the ball screw caused by poor circulation of the balls occurred was adopted as the lifetime of the ball screw. The test results are shown in Table 4. In addition, the values of the lifetime in Table 4 are expressed by relative values when the lifetime of the ball screw of Comparative Example 1 that is a general ball screw is set to 1.

As can be understood from Table 4, the ball screws of Embodiments 10 to 13 were longer in lifetime than the ball screws of Comparative Examples 8 and 9 on which a solid lubricating film was not coated on the internal surface of a tube. In addition, in the ball screws of Embodiments 10, 12, and 13, exfoliation occurred in the screw grooves of the screw shafts, and in the ball screw of Embodiment 11, exfoliation occurred in the screw groove of the nut.
Further, in the ball screw of Comparative Example 8, the internal surface of the tube was worn out, and malfunction of the ball screw caused by poor circulation of the balls occurred. Further, in the ball screw of Comparative Example 9, the internal surface of the tube was exfoliated, and malfunction of the ball screw caused by poor circulation of the balls occurred.
In addition, in the embodiments, particularly the R/D ratios of a male screw groove and a female screw groove are not set to different values. However, when the R/D of the male screw groove is set to 52%, the female screw groove is formed in a curved surface in the same direction as the ball rolling direction of the balls, and thereby has a contact stress approximate to the male screw groove at an R/D of 54%. (This difference varies according to the diameter of the balls, etc.) From this, there is no problem even if the R/D of the female screw groove is made larger than that of the male screw groove.
Although the invention has been described in detail with reference to the specific embodiments, it is clear to those skilled in the art that various alternations and modifications can be made without departing from the spirit and scope of the invention.
The present application claims priority to Japanese Patent Application Nos. 2005-88323, filed March 25, 2005, 2005-88324, filed March 25, 2005, 2005-92375, filed March 28, 2005, and 2006-11765, filed January 19, 2006, the whole contents of which are incorporated herein by reference.

### Industrial Applicability

The ball screw of the invention is suitable for, for example, an actuator, and particularly suitable for applications that are comparatively large and receive high load, like actuators, such as electric injection molding machines or pressing machines. In the conventional ball screw, the lower limit of the groove R ratio was about 52% from the viewpoint of an adverse effect of slipping. However, by forming an MoS₂ film on balls, a tangential force can be suppressed, and even if the groove R is set to about 51.5%, premature damage caused by the adverse effect of slipping can be prevented. By making the groove R small, the load capacity can be increased, and the lifetime of a high-load ball screw can be prolonged.

## Claims

1. A ball screw comprising:
a screw shaft having a spiral groove formed at an outer peripheral surface thereof;
a nut having a spiral groove formed at an inner peripheral surface thereof;
a raceway that is formed by the groove of the screw shaft and the groove of the nut that face each other;
a return passage that connects an ending point and a starting point of the raceway; and
a plurality of balls that are arranged in the return passage and the raceway,
wherein a ratio (R/D) of a radius (R) of an arc, which forms a cross-section of the groove of either the screw shaft or the nut, with respect to a diameter (D) of the ball is 51.0% or more and 52.0%, and
a solid lubricant film is formed on either a surface of the ball or a surface of a part which contacts with the ball.

2. The ball screw according to Claim 1, wherein
a surface hardness of the ball is higher than each of a surface hardness of the ball screw groove of the screw shaft and a surface hardness of the ball screw groove of the nut, and
the solid lubricant film is formed on the surface of the ball with a film thickness of 1 µm or more and 5 µm or less.

3. The ball screw according to Claim 2, wherein
the solid lubricant film is made of molybdenum disulfide or soft metal.

4. The ball screw according to Claim 3, wherein
the soft metal is selected from tin, gold, silver, zinc, indium, and alloys thereof.

5. The ball screw according to any one of Claims 1 to 4,
wherein the surface hardness of the ball is HRC 63 or more.

6. The ball screw according to Claim 1, wherein
cross-sectional shape of the groove of either the screw shaft or the nut is a Gothic arc (shape formed by connecting two arcs having the same radius and different centers),
the ratio (R/D) of a radius (R) of the arc, which forms the Gothic arc of the cross-section of the groove, with respect to the diameter (D) of the ball, is 51.0% or more and less than 52.0%, and
the solid lubricant film is formed on the surface of at least one of the groove of the screw shaft, the groove of the nut, and the ball.

7. The ball screw according to Claim 6, wherein
a clearance between the ball and the raceway is 5 µm or more and 70 µm, and
the thickness of the solid lubricant film is 0.5 µm or more and 3.0 µm or less.

8. The ball screw according to Claim 6 or 7, wherein
the solid lubricant film is made of molybdenum disulfide or tin.

9. The ball screw according to any one of Claims 6 to 8, wherein a retaining piece is arranged between the balls.

10. A linear motion device according to Claim 1, further comprising:
a retaining piece interposed between the balls; and
a circulating path that is formed in the linear motion body to circulate the balls from one end of the ball groove to the other end thereof,
wherein a film made of molybdenum disulfide, soft metal, or polymeric material is formed on at least a surface of the retaining piece that contacts with the balls.

11. The ball screw according to Claim 1, wherein
the solid lubricating film made of at least one of molybdenum disulfide and an organic molybdenum compound is coated on an internal surface of the ball return passage.

12. The ball screw according to Claim 11, wherein the ball return passage is made of resin.

13. The ball screw according to Claim 11, wherein the ball return passage is composed of a resinous member manufactured by injection molding.

14. The ball screw according to Claim 11, wherein the ball return passage is made of metal.

15. The ball screw according to Claim 11, wherein the ball return passage is composed of a metallic member manufactured by metal pressing.
